# EUROPÄISCHE PATENTANMELDUNG

(11) **EP 3 544 162 A1**
(43) Veröffentlichungstag der Anmeldung: **25.09.2019**
(21) Anmeldenummer: 18163565.7
(22) Anmeldetag: 23.03.2018
(51) Int. Cl.: H02K 15/06

(54) **VERFAHREN UND SYSTEM ZUR HERSTELLUNG EINES ROTORS ODER STATORS EINER ELEKTRISCHEN MASCHINE**

(71) Anmelder: Aumann Espelkamp GmbH, 32339 Espelkamp (DE)
(72) Erfinder: HAMM, Alexander, 32312 Lübbecke (DE)
(74) Vertreter: Schober, Mirko

(57) **Zusammenfassung**

Bei einem Verfahren zur Herstellung eines Rotors oder Stators einer elektrischen Maschine wird eine Wellenwickelmatte (1) in die zwischen den Polzähnen eines Bauteils (30) vorhandenen Nuten eingebracht. Das Verfahren weist die folgenden Schritte auf:
- Bereitstellen eines Bauteils (30), insbesondere eines Rotor- oder Statorblechpakets, mit einer Einbringseite, auf der sich radial erstreckende Polzähne und dazwischen jeweils Nuten befinden;
- Fixieren des Bauteils (30) an einer Halteanordnung, die zum Halten des Bauteils (30) ausgelegt ist,
- Heranführen einer Wellenwickelmatte (30) an das an der Halteanordnung fixierte Bauteil (30) mittels einer angetriebenen Vorschubeinrichtung (2, 20, 21, 22, 23, 40), die die Wellenwickelmatte erfasst und in Richtung des in der Halteanordnung gehaltenen Bauteils (30) vorschiebt.

Die angetriebene Vorschubeinrichtung (2, 20, 21, 22, 23, 40) führt die Wellenwickelmatte (1) in einer wenigstens abschnittweise schnecken- oder spiralförmigen Bewegungsbahn so, dass die Wellenwickelmatte (1) zumindest abschnittweise so mit der Breitseite parallel zur Einbringoberfläche positioniert ist, dass die Wicklungen der Wellenwickelmatte (1) in die Nuten eingedrückt werden können. Die so positionierten Abschnitte der Wellenwickelmatte (1) werden mittels einer Eindrückeinrichtung sukzessive in die Nuten eingedrückt.

## Beschreibung

Die Erfindung betrifft ein Verfahren und System zur Herstellung eines Rotors oder Stators einer elektrischen Maschine.

Bei der Herstellung von Rotoren oder Statoren von elektrischen Maschinen werden entsprechende Blechpakete mit Polzähnen und dazwischen angeordneten Nuten eingesetzt, die mit einer Wicklung zu bestücken sind. In dem hier zu betrachtenden Fall geht es darum, dass Wellenwicklungen in Form von Wellenwickelmatten in die genannten Blechpakete einzubringen sind. Eine Wellenwickelmatte besteht aus einer Mehrzahl Wellenwicklungen und ist deshalb ein Gebilde mit verhältnismäßig großer Eigenspannung. Aufgrund der Eigenspannung ist das eigentliche Einbringen der Wicklungen in ein entsprechendes Blechpaket nicht trivial, denn die eigentlich in ebener Form erzeugte Wellenwickelmatte muss entlang ihrer Längserstreckungsrichtung gerundet und mithin gebogen werden, was die Spannungen innerhalb der Wellenwickelmatte erhöht. Zudem muss die Wellenwickelmatte genau über den entsprechenden Nuten platziert werden, sodass sich deren Wicklungen radial in die Nuten eindrücken lassen.

Das Heranführen der Wellenwickelmatte an den hiermit zu bestückenden Gegenstand geschieht klassischerweise durch händisches Einsetzen. Es gibt schon automatisierte Vorrichtungen, die beim Eindrücken der einzelnen Windungen behilflich sind. Allerdings setzt dies voraus, dass die Wellenwickelmatte zuvor in eine bestimmte Eindrückposition gebracht wird.

Aufgabe der vorliegenden Erfindung ist es, ein Verfahren und ein System zur Herstellung eines Rotors oder Stators einer elektrischen Maschine anzugeben, mit deren Hilfe sich der gesamte Prozess der Überführung einer Wellenwickelmatte aus einer ebenen Anordnung in die entsprechende Eindrückposition relativ zum Bauteil einer elektrischen Maschine automatisieren lässt.

Gelöst wird diese Aufgabe durch ein Verfahren zur Herstellung eines Rotors oder Stators einer elektrischen Maschine mit den Merkmalen des Anspruchs 1 sowie durch eine Vorrichtung zur Herstellung eines Rotors oder Stators einer elektrischen Maschine mit den Merkmalen des Anspruchs 2. Vorteilhafte Ausführungsformen finden sich in den abhängigen Ansprüchen.

Erfindungsgemäß ist ein Verfahren zur Herstellung eines Rotors oder Stators einer elektrischen Maschine vorgesehen, bei welchem eine Wellenwickelmatte in die zwischen den Polzähnen eines Bauteils vorhandenen Nuten eingebracht wird. Bei dem Bauteil kann es sich beispielsweise um ein Rotor- oder Statorblechpaket handeln. Üblicherweise handelt es sich um einen Ring mit radial nach innen oder nach außen abstehenden Polzähnen, zwischen denen die Nuten liegen.

Das erfindungsgemäße Verfahren weist folgende Schritte auf:
- Bereitstellen eines Bauteils, insbesondere eines Rotor- oder Statorblechpakets, mit einer Einbringseite, auf der sich radial erstreckende Polzähne und dazwischen jeweils Nuten befinden;
- Fixieren des Bauteils an einer Halteanordnung, die zum Halten des Bauteils (30) ausgelegt ist,
- Heranführen einer Wellenwickelmatte an das an der Halteanordnung fixierte Bauteil mittels einer angetriebenen Vorschubeinrichtung, die die Wellenwickelmatte erfasst und in Richtung des in der Halteanordnung gehaltenen Bauteils (30) vorschiebt.

Die angetriebene Vorschubeinrichtung führt dabei die Wellenwickelmatte in einer wenigstens abschnittweise schnecken- oder spiralförmigen Bewegungsbahn so, dass die Wellenwickelmatte zumindest abschnittweise mit ihrer Breitseite parallel zur Einbringoberfläche positioniert ist. Dabei erfolgt dieser Positioniervorgang so, dass die Wicklungen der Wellenwickelmatte in die Nuten eingedrückt werden können. Letzteres ist vor allem dann der Fall, wenn die jeweiligen Wicklungsabschnitte, bei denen es sich in der Regel um gerade Drahtabschnitte zwischen den Wickelköpfen handelt, sich mehr oder weniger unmittelbar über der betreffenden Nut befinden. Die entsprechend positionierten Abschnitte der Wellenwickelmatte können dann mittels einer Eindrückeinrichtung sukzessive in die Nuten eingedrückt werden.

Die Erfindung betrifft auch ein System zur Herstellung eines Rotors oder Stators einer elektrischen Maschine, mit dessen Hilfe sich insbesondere das oben beschriebene Verfahren durchführen lässt.

Das erfindungsgemäße System weist eine Halteanordnung auf, die eingerichtet ist, ein Bauteil mit Polzähnen und dazwischen angeordneten Nuten, insbesondere ein Blechpaket für einen Rotor oder Stator einer elektrischen Maschine, fixiert zu halten. Ferner umfasst das erfindungsgemäße System eine angetriebene Vorschubeinrichtung, die die Wellenwickelmatte erfasst und in Richtung des in der Halteanordnung gehaltenen Bauteils vorschiebt. Die Vorschubeinrichtung weist dazu eine, insbesondere wenigstens abschnittweise schnecken- oder spiralförmige, Bewegungsbahn auf, auf der sie die Wellenwickelmatte führt. Die Bewegungsbahn ist dabei so geführt, dass die Vorschubeinrichtung die auf der Bewegungsbahn entlanggeführte Wellenwickelmatte aus einer im Wesentlichen linearen, flachliegenden Konfiguration in eine, gekrümmte, insbesondere aufgerollte Konfiguration überführt.

Mit dem erfindungsgemäßen System lässt sich dann eine flach liegende Wellenwickelmatte aus der flach liegenden Konfiguration in eine Position bringen, in der die weiter oben beschriebenen Drahtabschnitte in die Nuten zwischen den Polzähnen eingedrückt werden können. Das oben beschriebene Bauteil mit Polzähnen und dazwischen angeordneten Nuten ist bevorzugt Teil des Systems.

Nach einer bevorzugten Ausführungsform der vorliegenden Erfindung weist das erfindungsgemäße System weiter eine Eindrückeinrichtung auf, die so ausgelegt und relativ zur Halteanordnung bewegbar ist, dass sie die Wicklungen der Wellenwickelmatte durch ihre, insbesondere radiale, Bewegung in die Nuten eindrückt. Die Ausgestaltung einer solchen Eindrückeinrichtung kann vielfältig sein, beispielsweise können Schieber oder auch Drahtführungselemente verwendet werden.

Die Vorschubeinrichtung kann ebenfalls auf unterschiedliche Weise ausgebildet sein. Eine bevorzugte Ausführungsform sieht vor, dass die Vorschubeinrichtung ein im Kreislauf geführtes Zugmittel, insbesondere einen Zahnriemen, umfasst. Das Zugmittel kann die Wellenwickelmatte sowohl auf Basis eines Formschlusses als auf Basis eines Kraftschlusses mitnehmen. Dazu kann insbesondere vorgesehen sein, dass das Zugmittel selbst aus einem elastischen Material gebildet ist oder wenigstens ein elastisches Material umfasst. Auf diese Weise kann auch verhindert werden, dass die Isolation der Wellenwickelmatte, insbesondere der verwendete Lackdraht, beschädigt wird.

Bevorzugt ist vorgesehen, dass das Zugmittel über Rollen geführt ist, wobei wenigstens eine Rolle angetrieben ist. Es können natürlich auch mehrere Antriebsrollen vorgesehen sein, um einen Gleichlauf des Zugmittels über eine längere Strecke sicherzustellen. Hierzu können die Antriebsrollen dann miteinander synchronisiert sein.

Nach einer alternativen Ausführungsform der vorliegenden Erfindung kann vorgesehen sein, dass die Vorschubeinrichtung eine Mehrzahl entlang der Bewegungsbahn angeordnete Rad- oder Rollenantriebsmittel aufweist. Diese Antriebsmittel sind in diesem Fall dazu ausgelegt kraft-, reib- und/ oder formschlüssig mit der Wellenwickelmatte zusammenzuwirken und diese zur Halteanordnung entlang der Bewegungsbahn vorzuschieben. Bei dieser Ausführungsform kann beispielsweise auf ein im Kreis geführtes Zugmittel verzichtet werden.

Bevorzugt ist dabei vorgesehen, dass die Rad- oder Rollenantriebsmittel um eine Drehachse senkrecht zum Verlauf der Bewegungsbahn in Vorschubrichtung drehbar angetrieben sind. Natürlich können auch lediglich ein einziges oder nur einige der Rad- oder Rollenantriebsmittel drehbar angetrieben sein.

Um eine sichere Führung der Wellenwickelmatte gewährleisten zu können, ist nach einer bevorzugten Ausführungsform vorgesehen, dass die Rad- oder Rollenantriebsmittel auf ihrer Umfangsfläche ein Reibbelag und/oder Mitnehmervorsprünge aufweisen.

Die Erfindung wird nachfolgend anhand der Figuren 1 bis 3 näher erläutert.
- Figur 1 -: zeigt eine schematische Ansicht eines erfindungsgemäßen Systems,
- Figur 2 -: zeigt eine seitliche Ansicht auf einen Teil des erfindungsgemäßen Systems im Bereich der Übernahme einer Wellenwickelmatte,
- Figur 3 -: zeigt eine seitliche Ansicht auf einen weiteren Teil des erfindungsgemäßen Systems im Bereich des mit der Wellenwickelmatte zu bestückenden Bauteils.

In den Figuren bezeichnet 1 eine Wellenwickelmatte, welche dem erfindungsgemäßen System zugeführt wird. Die Zuführrichtung ist in diesem Fall durch den Pfeil P1 dargestellt. Im gezeigten Beispiel umfasst die Vorschubeinrichtung einen Zahnriemen 2, mit dessen Hilfe die Wellenwickelmatte 1 gegriffen und in Richtung des Bauteils 30 vorgeschoben wird.

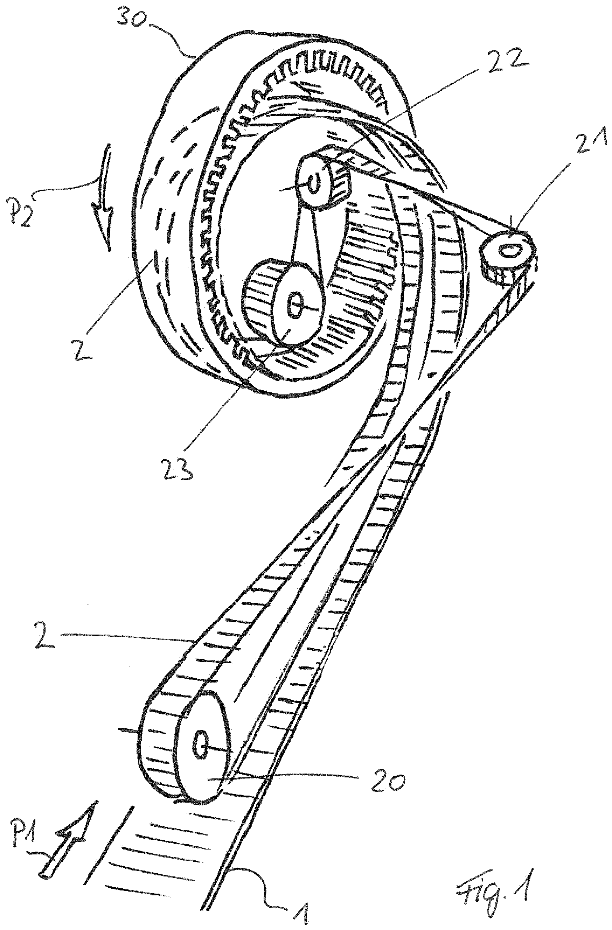

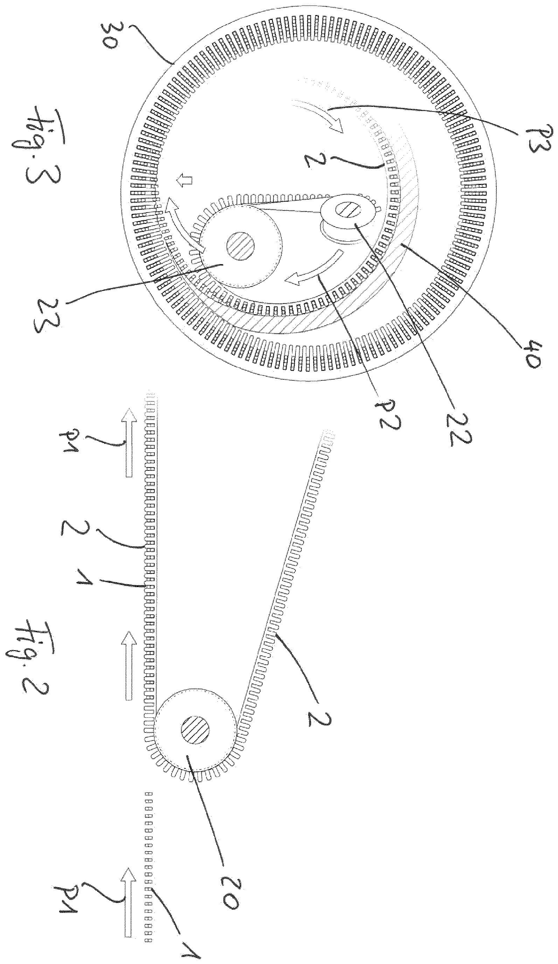

Wie man insbesondere in dem Ausschnitt von Figur 2 erkennt, wird die Wellenwickelmatte 1 in den Erfassungsbereich des Zahnriemens 2 vorgeschoben, sodass sich die Drahtabschnitte der Wellenwickelmatte 1 zwischen die Zähne des Zahnriemens 2 legen. Der Zahnriemen ist angetrieben, und über eine Mehrzahl Rollen 20 - 23 geführt, wobei wenigstens eine der Rollen angetrieben ist. Im Einlaufbereich, also dort, wo der Zahnriemen 2 die Wellenwickelmatte 1 übernimmt, ist eine erste Rolle 20 vorgesehen. Von dort läuft der Zahnriemen 2 im gezeigten Beispiel in Richtung des Bauteils 30. Das Bauteil 30 ist im gezeigten Beispiel ein Ring mit nach innen abstehenden Polzähnen, zwischen denen Nuten ausgebildet sind, in welche die entsprechenden Windungsabschnitte der Wellenwickelmatte 1 eingebracht werden sollen. Wie man insbesondere in Figur 1 erkennt, ist der Zahnriemen 2 so geführt, dass er sich abschnittsweise in einer schnecken- oder spiralförmigen Bahnkurve windet und innerhalb des Ringes 30 schließlich ein Stück parallel zu dessen Umfangsrichtung verläuft.

Der Zahnriemen 2 ist in einer nicht weiter dargestellten Führung geführt, sodass er insbesondere beim Durchlaufen des spiral- oder schneckenförmigen Abschnitts auf einer festen Bahnkurve bewegt wird. Dazu können beispielsweise seitliche Führungen den Zahnriemen 2 auf dieser Bahnkurve halten. Ein letzter Abschnitt dieser Führung ist in Figur 3 als Pos. 40 dargestellt.

Die im Einlaufbereich ergriffene Wellenwickelmatte 1 wird durch Bewegen des Zahnriemens 2 in Richtung der Pfeile P1, P2, P3 in Figur 3 entsprechend über den Nuten des Bauteils 30 angeordnet und kann dort in die Nuten mithilfe einer nicht weiter dargestellten geeigneten Vorrichtung eingedrückt werden. Im Bereich des Bauteils 30 wird die Wellenwickelmatte 1 durch Eindrücken derselben in die Nuten vom Zahnriemen 2 getrennt, welcher dann über die Rollen 23, 22 und 21 in dieser Richtung weiter transportiert wird. Aufgrund der Endlosführung der Vorschubeinrichtung ist es möglich, die Wellenwickelmatte 1 in beliebiger Länge an das Bauteil 30 heranzuführen.

## Patentansprüche

1. Verfahren zur Herstellung eines Rotors oder Stators einer elektrischen Maschine, bei welchem eine Wellenwickelmatte (1) in die zwischen den Polzähnen eines Bauteils (30) vorhandenen Nuten eingebracht wird, aufweisend folgende Schritte:
- Bereitstellen eines Bauteils (30), insbesondere eines Rotor- oder Statorblechpakets, mit einer Einbringseite, auf der sich radial erstreckende Polzähne und dazwischen jeweils Nuten befinden;
- Fixieren des Bauteils (30) an einer Halteanordnung, die zum Halten des Bauteils (30) ausgelegt ist,
- Heranführen einer Wellenwickelmatte (30) an das an der Halteanordnung fixierte Bauteil (30) mittels einer angetriebenen Vorschubeinrichtung (2, 20, 21, 22, 23, 40), die die Wellenwickelmatte erfasst und in Richtung des in der Halteanordnung gehaltenen Bauteils (30) vorschiebt,
wobei die angetriebene Vorschubeinrichtung (2, 20, 21, 22, 23, 40) die Wellenwickelmatte (1) in einer wenigstens abschnittweise schnecken- oder spiralförmigen Bewegungsbahn so führt, dass die Wellenwickelmatte (1) zumindest abschnittweise so mit der Breitseite parallel zur Einbringoberfläche positioniert ist, dass die Wicklungen der Wellenwickelmatte (1) in die Nuten eingedrückt werden können, wobei die so positionierten Abschnitte der Wellenwickelmatte (1) mittels einer Eindrückeinrichtung sukzessive in die Nuten eingedrückt werden.

2. System zur Herstellung eines Rotors oder Stators einer elektrischen Maschine, insbesondere zur Durchführung eines Verfahrens nach Anspruch 1, aufweisend:
- eine Halteanordnung, die eingerichtet ist, ein Bauteil (30) mit Polzähnen und dazwischen angeordneten Nuten, insbesondere ein Blechpaket für einen Rotor oder Stator einer elektrischen Maschine, fixiert zu halten,
- eine angetriebene Vorschubeinrichtung (2, 20, 21, 22, 23, 40), die die Wellenwickelmatte erfasst und in Richtung des in der Halteanordnung gehaltenen Bauteils (30) vorschiebt,
wobei die Vorschubeinrichtung (2, 20, 21, 22, 23, 40) eine, insbesondere wenigstens abschnittweise schnecken- oder spiralförmige, Bewegungsbahn aufweist, auf der sie die Wellenwickelmatte (1) führt, wobei die Bewegungsbahn so geführt ist, dass die Vorschubeinrichtung (2, 20, 21, 22, 23, 40) die auf der Bewegungsbahn entlanggeführte Wellenwickelmatte (1) aus einer im Wesentlichen linearen, flachliegenden Konfiguration in eine, gekrümmte, insbesondere aufgerollte Konfiguration überführt.

3. System nach Anspruch 2,
**dadurch gekennzeichnet,**
**dass** es ein Bauteil (30) mit Polzähnen und dazwischen angeordneten Nuten, insbesondere ein Blechpaket für einen Rotor oder Stator einer elektrischen Maschine umfasst.

4. System nach Anspruch 2 oder 3,
weiter aufweisend eine Eindrückeinrichtung, die so ausgelegt und relativ zur Halteanordnung bewegbar ist, dass sie die Wicklungen der Wellenwickelmatte (1) durch ihre, insbesondere radiale, Bewegung in die Nuten eindrückt.

5. System nach einem der Ansprüche 2 bis 4,
**dadurch gekennzeichnet,**
**dass** die Vorschubeinrichtung (2, 20, 21, 22, 23, 40) ein im Kreislauf geführtes Zugmittel, insbesondere einen Zahnriemen (2) umfasst.

6. System nach Anspruch 5,
**dadurch gekennzeichnet,**
**dass** das Zugmittel (2) über Rollen (20 - 23) geführt ist, wobei wenigstens eine Rolle (20 - 23) angetrieben ist.

7. System nach einem der Ansprüche 2 bis 4,
**dadurch gekennzeichnet,**
**dass** die Vorschubeinrichtung eine Mehrzahl entlang der Bewegungsbahn angeordnete Rad- oder Rollenantriebsmittel aufweist, die dazu ausgelegt sind kraft-, reib- und/oder formschlüssig mit der Wellenwickelmatte (1) zusammenzuwirken und diese zur Halteanordnung entlang der Bewegungsbahn vorzuschieben.

8. System nach Anspruch 7,
**dadurch gekennzeichnet,**
**dass** die Rad- oder Rollenantriebsmittel um eine Drehachse senkrecht zum Verlauf der Bewegungsbahn in Vorschubrichtung drehbar angetrieben sind.

9. System nach Anspruch 7 oder 8,
**dadurch gekennzeichnet,**
**dass** die Rad- oder Rollenantriebsmittel auf ihrer Umfangsfläche ein Reibbelag und/oder Mitnehmervorsprünge aufweisen.
